# EUROPEAN PATENT SPECIFICATION

(11) **EP 2 777 861 B1**
(45) Date of publication and mention of the grant of the patent: **02.11.2016**
(21) Application number: 14159798.9
(22) Date of filing: 14.03.2014
(51) Int. Cl.: B23K 26/04, G01B 7/02, G01B 7/14, G01B 7/00

(54) **Fast response capacitive gauging system featuring steep slope filter discrimination circuit**
Schnell reagierendes kapazitives Messsystem umfassend eine Selektionsschaltung mit steilen Filterflanken
Système de jaugeage capacitif à réponse rapide comprenant un circuit de discrimination avec filtre À front raide

(30) Priority: 15.03.2013 US 201313832823
(43) Date of publication of application: 17.09.2014
(73) Proprietor: Laser Mechanisms, Inc., Novi, MI 48375 (US)
(72) Inventor: Hermann, Gerald F., Westland, MI Michigan 48186 (US); Buckley, Daniel R., Canton, MI Michigan 48187 (US); Swartzinski, Scott D., Howell, MI Michigan 48843 (US)
(74) Representative: Regimbeau

(56) References cited:
- DE-A1- 4 205 759
- US-A1- 2011 089 956

## Description

### FIELD

The present disclosure relates generally to capacitive gauging systems and more particularly to an improved capacitive gauging system for use in applications such as industrial laser processing, including but not limited to cutting, scribing, ablating and welding, and for use in other applications where the position of a moving member is controlled or measured using capacitive gauging. The system described herein can provide a means of measuring the tip-to-part standoff distance, for example. This distance measurement may be used as feedback to a servo loop to maintain a constant tip-to-part standoff, for example.

### BACKGROUND

This section provides background information related to the present disclosure. In capacitive gauging systems there are applications, such as laser processing, where extremely fast response times, noise immunity and compensation of background capacitance are essential. The ability of a system to excel in these features would make a product more effective and superior to other designs.

For example, maintaining a constant standoff height is advantageous in a laser process, as it keeps the laser focus consistent in relation to the part, as well as keeping the gas flow dynamics consistent. Using capacitance to measure the tip-to-part standoff distance is the preferred method for laser processing; however there exists some significant design challenges. Among these challenges are:
a) Fast laser processing results in proportionally fast tip-to-part standoff compensation. Typical response times for capacitive gauging systems are slower than 2 msec, and thus place a practical limit on laser processing speeds.
b) Industrial laser processing is inherently electrically noisy. The plasma and ejected molten metal can interfere with the capacitance thus disrupting the ability of the system to accurately measure the tip-to-part standoff. The typical way of dealing with this interference is to filter it out with a low pass filter with a cut-off frequency of ~500 Hz., again resulting in a relatively slow response time that degrades overall laser processing speed.
c) The capacitance variation seen between the tip and the part can be less than a picofarad. For this reason, keeping the background capacitance constant is essential for accurate tip-to-part gauging. However, variations in temperature, humidity and other external influences can alter the background capacitance, causing significant errors in the tip-to-part measurement. Conventional systems have difficulty dealing with this error.

Document US 2011/089956 discloses a capacitive system for detecting the height of a laser nozzle from a metal work piece. The system detects changes in capacitance of the laser head with respect to a work piece.

Document DE420575A discloses a laser processing head having an incorporated height capacitor system.

### SUMMARY

This section provides a general summary of the disclosure, and is not a comprehensive disclosure of its full scope or all of its features.

The improved capacitive gauging system described more fully herein has a unique analog circuit that employs a carefully calibrated capacitance-responsive oscillator and a high-order bypass filter to process the output of the oscillator and thus measure changes in capacitance even when those changes occur very rapidly. By bypass filter is meant in the present text a low pass filter, a high pass filter or a notch filter. The improved gauging system has a potential response time of faster than 0.01msec and is thus considerably faster to respond than conventional (2 msec) capacitive gauging systems.

Instead of using a conventional 500 Hz. low pass filter to filter out laser-induced noise (at the expense of speed), the improved capacitive gauging system uses its high-frequency, high-order, bypass filter to rapidly discriminate between minute changes in capacitance. Thus the improved capacitive gauging system concentrates on quick recovery from noise, instead of attempting to filter it out. By high frequency is meant in the present text a frequency greater than 500 kHz, e.g. between 500kHz and 1 MHz. By high order is meant in the present text an order greater than 4.

To address environmental variances (e.g., in temperature and/or humidity) the improved capacitive gauging system uses a compensation circuit to adjust for the background capacitance when the tip is a relatively far distance away from the part. The compensation circuit is engaged at intervals between the cutting, scribing, ablating and/or welding processes. It accurately calibrates the oscillator to match the "sweet spot" of the high-frequency, high-order, low pass filter, so that the filter can continue to discriminate very small changes in capacitance as the probe tip-to-part distance changes.

Further areas of applicability will become apparent from the description provided herein. The description and specific examples in this summary are intended for purposes of illustration only and are not intended to limit the scope of the present disclosure.

### DRAWINGS

The drawings described herein are for illustrative purposes only of selected embodiments and not all possible implementations, and are not intended to limit the scope of the present disclosure.
Figure 1 is a block diagram of the improved capacitive gauging system shown in context with the servomotor system used to drive the up-down movement of the tip relative to the part;
Figure 2 is a detailed block diagram of the improved capacitive gauging system, with superimposed graphs showing various relationships among distance (d), capacitance (C), frequency (freq), amplitude (amp) and voltage out (Vout);
Figure 3 is a graph showing how filter slope affects discrimination ability of the capacitance sensor;
Figure 4 is an oscilloscope waveform diagram showing how the height (sense signal) produced by the capacitive sensor compares with the position indicator produced by the gauging system in the presence of noise;
Figure 5 represents response curves of the system used to detect different materials.

Corresponding reference numerals indicate corresponding parts throughout the several views of the drawings.

### DETAILED DESCRIPTION

Example embodiments will now be described more fully with reference to the accompanying drawings.

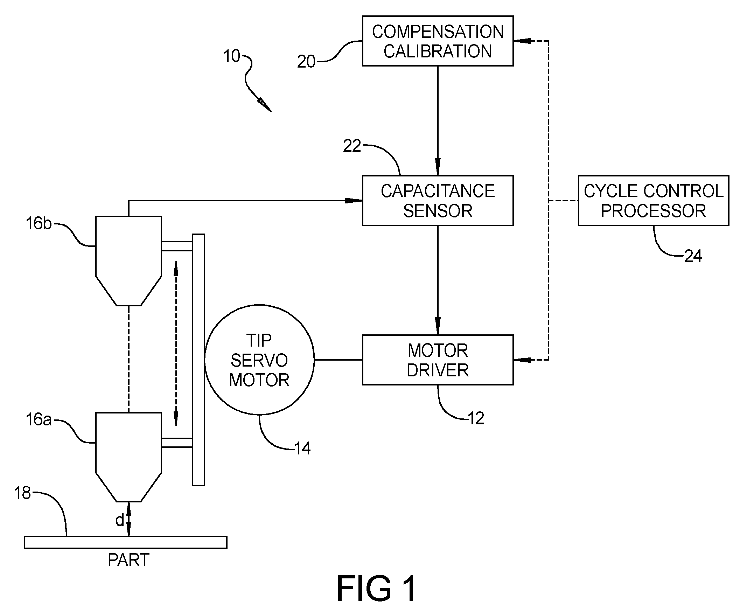

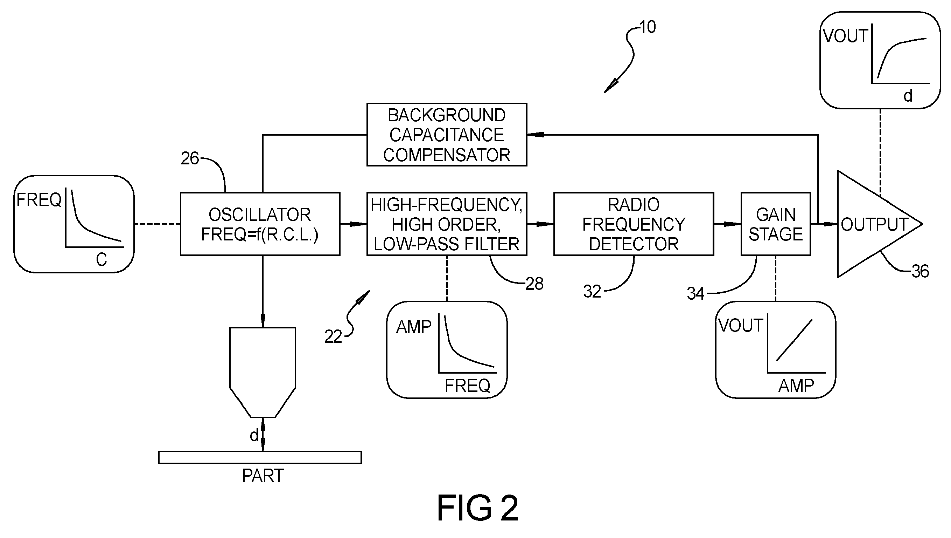

With reference to Figure 1, the improved capacitive gauging system is shown generally at 10. As illustrated, the gauging system supplies a control signal to the motor driver circuit 12, which in turn controls the up-down motion of the tip servomotor 14. For illustration purposes, Figure 1 shows the tip 16 in two positions: position 16a-in working proximity to the part 18 and position 16b-in retracted position. It will be understood that during use, the servomotor 14 is controlled to maintain the proper working distance (d) between tip 16 and part 18. As will be more fully described below, from time to time, such as between intervals of working interaction between tip and part (e.g., during cutting, scribing, ablating and/or welding), the servomotor 14 retracts the tip to position 16b. When retracted to position 16b, the compensation calibration circuit 20 performs a calibration operation upon the capacitance sensor 22. Details of the compensation calibration circuit 20 and capacitance sensor 22 are provided below in connection with Figure 2.

The improved capacitive gauging system employs a unique analog circuit that performs highly accurate and rapid capacitive sensing. A digital circuit, cycle control processor 24 mediates the operation of this analog circuit. The cycle control processor 24 sends digital control instructions to the motor driver 12 to cause the tip servomotor 14 to retract the tip to position 16b. This retraction motion would typically be performed after a particular working interaction between tip and part have completed, such as when it is time to remove a finished part and insert a fresh part to be worked upon. Upon retraction of the tip, the cycle control processor 24 sends digital control instructions to the compensation calibration circuit 20, causing it to calibrate the capacitance sensor 22 for its next use.

Referring now to Figure 2, the capacitance sensor 22 of the improved capacitive gauging system 10 employs an oscillator 26. The frequency generated by the oscillator is a function of resistance (R), capacitance (C) and/or inductance (L). The capacitance (C) portion of the function is itself a function of the distance (d) between the tip and the part. As the distance between the tip and the part changes, the capacitance changes, resulting in a change in the oscillator frequency. The resulting frequency is nominally between 1KHz and 1GHz. The oscillator can be based on a LM 555 timer circuit in "Astable operations" mode (see data sheet www.natural.com/ds/LM555.pdf) optional modification to this circuit can be used to reduce the circuit's susceptibility to temperature variations. For example, the circuit can be separated into an input buffer, comparator, and flip-flop.

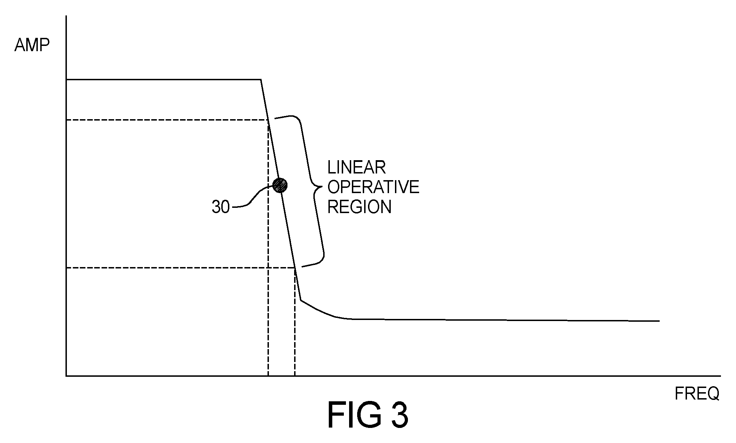

The output of the oscillator 10 is sent through a high-frequency, high-order (steep slope) low-pass filter 28. The low pass filter 28 can be implemented as active filter with a cut-off frequency close to the operating frequency of the oscillator. In a presently preferred embodiment filter 28 is a 7^{th} order filter, which provides a very steep cut-off curve. In general, the steeper the cut-off curve, the more sensitive the resulting system will be. The resulting output of filter 28 will have an amplitude that increases as the frequency decreases. This can be illustrated with reference to Figure 3, which shows the slope of an exemplary low-pass filter. Note that the filter is designed with its "sweet spot" 30 centered at a frequency that matches the nominal frequency of the oscillator 26 when the tip is in its retracted position 16b. Because of the steep cut-off slope, a small change in oscillator frequency (x-axis) will produce a large change in filter output amplitude (y-axis). In order to achieve the high order (greater than 4) of filtering, commercially available active filters are implemented with appropriate support circuitry (e.g., datasheets.maxim-ic.com/en/ds/max280-mxl1062.pdf).

While a high-frequency, high-order low-pass filter is presently preferred, the capacitance sensor 22 may also be implemented using a high-pass filter or notch filter. Essentially, any filter that provides a steep slope that can produce a large change in filter output for a small change in oscillator frequency will work. If a high-pass filter is chosen, for example, the curve illustrated in Figure 3 would be flipped so that linear operative region would slope in the opposite direction. While this would change the polarity of the filter output, essentially the same frequency discrimination can be had.

To measure the output amplitude of filter 28, the capacitance sensor 22 employs a radio-frequency detector 32. The radio frequency detector is tuned to receive frequencies covering the frequencies associated with the linear operative region of filter 28. The radio-frequency detector 32 thus produces an output signal that, in effect, converts the varying amplitude output of filter 28 into a varying voltage (Vₒᵤₜ). The RF detector 32 produces a DC voltage that is proportional to the power in the signal that results from the bypass filter (low-pass) 28. The RF detector can be implemented using a diode based rectifier circuitry or dedicated integrate circuit (see datasheets.maxim-ic.com/en/ds/max2016.pdf). To improve signal response, a suitable gain stage 34 is included, with its amplified output fed to a final output stage 36 which feeds and/or comprises part of the motor driver circuit 12 (Figure 1). The motor output stage optimizes the signal and conditions it for use as a gauging system. This signal thus feeds the tip servomotor 14 which translates the Vₒᵤₜ signal into a physical position (d). The gain stage can be a standard op-amp based differential filter.

To work effectively, the sweet spot 30 of the filter (Figure 3) should be positioned at or near the nominal frequency of the oscillator 26. As explained above, the oscillator frequency varies in relation to the sensed capacitance. Capacitance, in turn, varies as the distance between tip and part changes. However, capacitance is also affected by environmental conditions, such as temperature and humidity, and these environmental factors can significantly degrade accuracy. To compensate for environmental variances, the improved capacitive gauging system employs a compensation calibration circuit 20, which utilizes a background capacitance compensator circuit 38. Compensator circuit 38, when engaged, forms a feedback loop between the output of gain stage 34 and the oscillator 26. The compensator circuit 38 is selectively connected (in response to instruction from the cycle control processor 24, Figure 1) when the tip is in its retracted position 16b. The background capacitance compensator circuit uses closed loop feedback control to accurately set the oscillator frequency of oscillator 26 by adjusting parameters of the oscillator frequency function to normalize the resulting signal when the tip is far from the part, or some other known position.

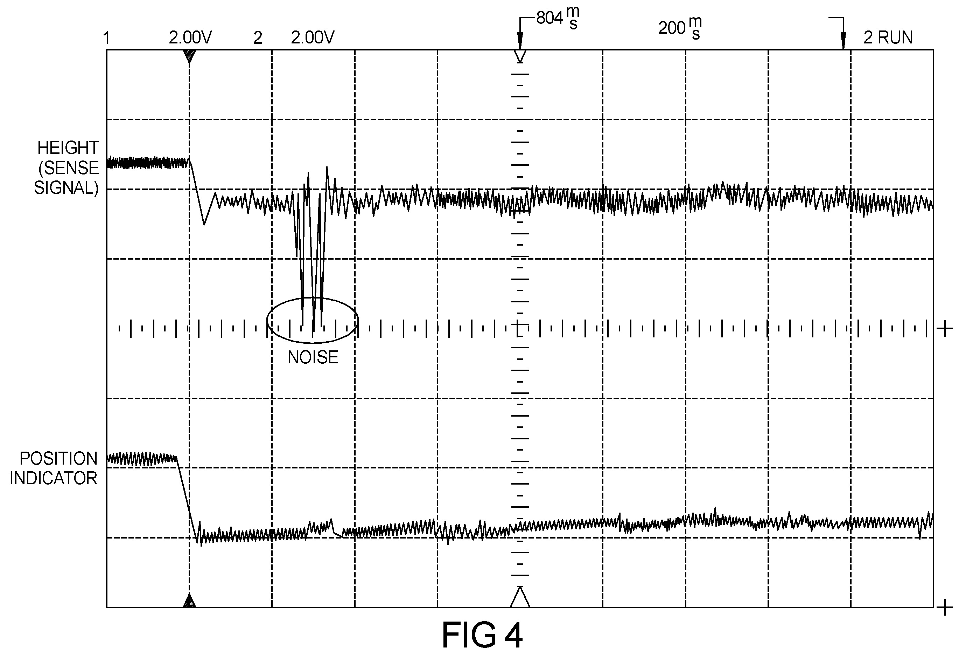

Unlike conventional capacitive gauging systems, which employ heavy low pass filtration (e.g. 500 Hz.) to filter out laser process-induced noise, the improved capacitive gauging system is able to operate in the presence of noise. To illustrate, refer to Figure 4, which shows the output of a dual trace oscilloscope. The uppermost waveform depicts the output of the capacitive sense signal and the lowermost waveform depicts the position indicator output of the gauging system. Note that the capacitive sense signal has a lot of noise that is created by the laser process and is detected by the height sensing circuit. Even in the presence of this noise, the resulting motion shown on the bottommost waveform shows negligible noise.

According to the present teachings, the system described above can be used to detect the distance between the laser processing head and a polymer work piece. The capacitive sense signal from the capacitance sensor 22 of the improved capacitive gauging system 10 employs an oscillator 26. The frequency generated by the oscillator is a function of resistance (R), capacitance (C) and/or inductance (L). The capacitance (C) portion of the function is itself a function of the distance (d) between the tip and the part. As the distance between the tip and the part changes, the capacitance changes, resulting in a change in the oscillator frequency.

In the case where the workpiece is a non-conductive polymer, it is thought changes in the proximity of the laser head to a polymer work piece changes the dielectric constant. This change causes a change in the capacitive sense signal. As described above, the change in signal is used to control the movement of the servo motor to control the operating characteristics of the system.

As described further in detail below, the system described above, with some modification, can be used to control the height of the laser head above a polymer component or work piece. This modification will allow the use of a cutting laser to accurately process polymer components. The height sensing circuit detects variations in the capacitance of the tip in relation to earth ground. In the previously described system, the metal workpiece can be electrically connected to earth ground. As polymer components are typically non-conductive, the system described herein also can use a measurement of capacitance to earth ground. As described above, changes in capacitance are converted to a change in frequency. The variations in frequency are converted to a voltage and used in a servo loop to maintain a constant tip-to-surface gap (standoff height).

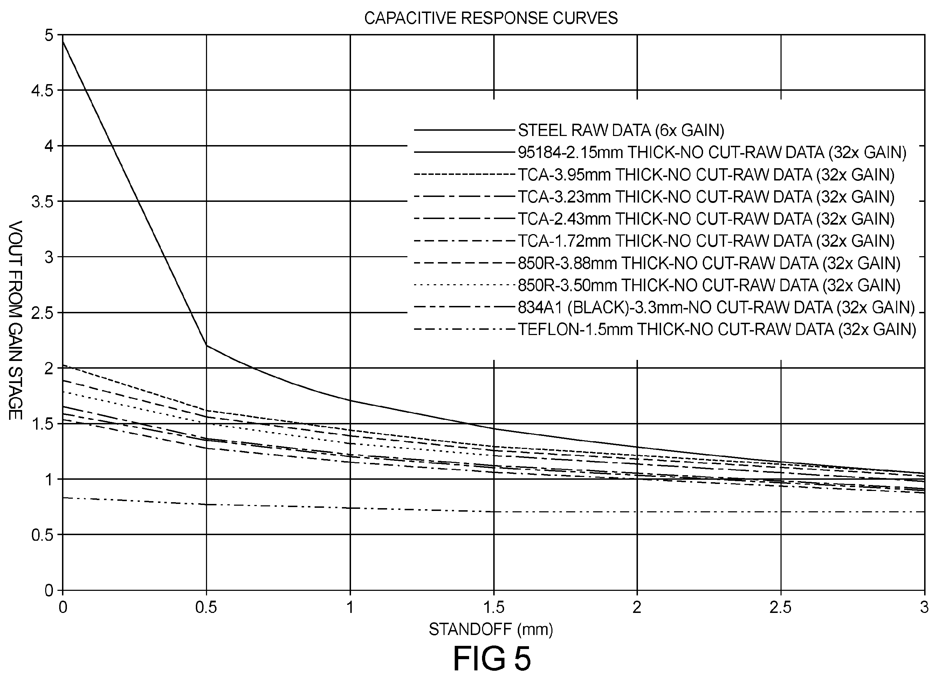

Figure 5 represents the various capacitive response curves for different materials. Briefly returning to Figure 2 is the Gain Stage 32 can be adjusted to detect different materials. To detect metal, the gain can be set to for instance 8x. To plastic components in the vicinity of the head, the gain at stage 32 can be set to 32x. The output stage, 36, is then adjusted to linearize the output.

The detected amount of variation in capacitance of the tip in relation to a plastic part is extremely small. In order to effectively sense a plastic part the gain of the circuit can be extremely high. With the gain set this high the circuit becomes sensitive to variations in environmental conditions such as temperature and humidity. Associated with laser processing of materials is the assist gas type, pressure, temperature and humidity may affect the height sensing of plastic parts. Controlling these conditions may be important to successful operation. Control of the environment in a manufacturing environment would therefore be helpful. This would include keeping air around the laser head clean and dry.

Doing a quick recalibration of the height sensor after each cut is standard for Laser Mech FiberCut head to help keep the process consistent. However, this process may be critical for plastic cutting due to the high gain setting and sensitivity to environmental variations in temperature, humidity, assist gas

The height sensor disclosed herein has the ability to store multiple curve characteristics for various materials being cut. In this regard, the height sensor may be associated with a robotic arm which will position the cutting head at various locations along a work piece. Background capacitance can vary significantly depending on the structural environment. This can include variation based on for example polymer work piece thickness. Originally these "curves" were intended to allow selection of different tip styles. However this same technology can be utilized to allow selection of different material types. Switching between curves and recalibration can happen in a matter of ~50msec.

It has been noted the capacitive response of the plastic material changes while laser cutting. Typical characterization of the capacitive response with metallic parts is performed without laser cutting. However, with plastic it may be advantageous or necessary to characterize the response while performing a test cut.

From the foregoing it will be seen that the improved capacitive gauging system advantageously utilizes a blend of analog and digital circuitry to produce fast and highly accurate measurements even in the presence of noise. The system uses the tip retraction intervals to perform environmental calibration, thus ensuring high accuracy even in the face of temperature and humidity variations.

While the improved capacitive gauging system has been illustrated and described in its presently preferred form, it will be understood that certain modifications can be made to the circuitry or selected components without departing from our inventive concept.

The foregoing description of the embodiments has been provided for purposes of illustration and description. It is not intended to be exhaustive or to limit the disclosure. Individual elements or features of a particular embodiment are generally not limited to that particular embodiment, but, where applicable, are interchangeable and can be used in a selected embodiment, even if not specifically shown or described. The same may also be varied in many ways. Such variations are not to be regarded as a departure from the disclosure, and all such modifications are intended to be included within the scope of the disclosure.

## Claims

1. A capacitive sensing system (10) for measuring the height of a laser head above a plastic work piece, said system comprising:
a laser head nozzle (16) forming a first plate of a capacitor; the plastic work piece (18) forming a dielectric portion of the capacitor, the capacitor including an earth ground;
a capacitive-responsive radio frequency oscillator (26) operably coupled to the capacitor, said oscillator providing an output;
a temperature/humidity compensation circuit (20) forming a feedback loop between an output of a gain stage (34) and the capacitive-responsive radio frequency oscillator, the temperature/humidity compensation circuit being configured to compensate for changes in background capacitance, wherein the gain stage is set to be adjusted from a first gain to a second gain to detect different materials; and
a high-order bypass filter (28) to process the output from the oscillator to measure changes in capacitance of the capacitor.

2. The capacitive sensing system of Claim 1, further comprising an actuator (14) configured to move the laser head nozzle (16) in response to the changes in capacitance of the capacitor.

3. The capacitive sensing system according to any one of Claim 1 or Claim 2, wherein the high-order bypass filter has a response time of faster than about 0.01 msec.

4. The capacitive sensing system according to Claim 1, further comprising a controller (24) configured to engage the compensative circuit at intervals between successive activation of the laser nozzle.

5. The capacitive sensing system according to Claim 4, wherein the successive activation of the nozzle is associated with one of cutting the work piece, scribing the work piece, ablating the work piece, welding the work piece, and combinations thereof.

6. The capacitive sensing system according to any one of Claim 1 to Claim 5, wherein the bypass filter (28) is one of a low-pass filter, a high-pass filter, and a notch-filter.

7. The capacitive sensing system according to any one of Claim 1 to Claim 6, further comprising a radio-frequency detector (32) coupled to the high frequency high-order bypass filter (28).

8. The capacitive sensing system according to Claim 7, wherein the radio frequency detector (32) converts a varying output of the filter into a varying voltage.

9. A sensing system for a laser, the system comprising:
a laser having a nozzle (16);
an actuation mechanism (14) coupled to the nozzle;
a capacitive sensing system (10) according to Claim 1, comprising a capacitor formed of the nozzle and a polymer work piece and an earth ground; and
a radio frequency detector (32) configured to convert a varying output of the bypass filter of the capacitive sensing system into a varying voltage, wherein said actuation mechanism is operably coupled to the radio frequency detector to move the nozzle in response to the varying voltage.

10. The sensing system according to Claim 9, further comprising a capacitive compensation circuit (20) operably coupled to the bypass filter.

11. The sensing system according to Claim 10, wherein the compensation circuit (20) forms a feedback loop between an output of a gain stage and the oscillator.

12. The sensing system according to Claim 11, wherein the compensation circuit (20) is selectively engaged when the nozzle is in an unengaged condition.

13. The sensing system according to Claim 9, wherein the gain stage of the compensation circuit is adjustable from a first gain of 8x to a second gain of 32x.

## Patentansprüche

1. Kapazitives Messsystem (10) zum Messen der Höhe eines Laserkopfs über einem Kunststoffwerkstück, wobei das System umfasst:
eine Laserkopf-Düse (16), die eine erste Platte eines Kondensators bildet; wobei das Kunststoffwerkstück (18) einen dielektrischen Abschnitt des Kondensators bildet, und der Kondensator eine Bezugserde umfasst;
einen auf Kapazitätsänderungen ansprechenden Hochfrequenzoszillator (26), der mit dem Kondensator betriebsfähig gekoppelt ist, wobei der Oszillator einen Ausgang liefert;
eine Temperatur-/Feuchtigkeits-Kompensationsschaltung (20), die eine Rückführungsschleife zwischen einem Ausgang einer Verstärkungsstufe (34) und dem auf Kapazitätsänderungen ansprechenden Hochfrequenzoszillator bildet, wobei die Temperatur-/Feuchtigkeits-Kompensationsschaltung so ausgelegt ist, dass sie Änderungen der Hintergrundkapazität kompensiert, wobei die Verstärkungsstufe so festgelegt ist, dass sie von einer ersten Verstärkung auf eine zweite Verstärkung eingestellt wird, um verschiedene Materialien zu detektieren; und
ein Bypassfilter hoher Ordnung (28) zum Verarbeiten des Ausgangs vom Oszillator, um Änderungen der Kapazität des Kondensators zu messen.

2. Kapazitives Messsystem nach Anspruch 1, ferner umfassend einen Aktor (14), der so ausgelegt ist, dass er die Laserkopf-Düse (16) in Reaktion auf die Änderungen der Kapazität des Kondensators bewegt.

3. Kapazitives Messsystem nach einem der Ansprüche 1 oder Anspruch 2, wobei das Bypassfilter hoher Ordnung eine Reaktionszeit von weniger als etwa 0,01 ms aufweist.

4. Kapazitives Messsystem nach Anspruch 1, ferner umfassend eine Steuereinrichtung (24), die so ausgelegt ist, dass sie die Kompensationsschaltung in Intervallen zwischen aufeinander folgenden Aktivierungen der Laserdüse zuschaltet.

5. Kapazitives Messsystem nach Anspruch 4, wobei die aufeinander folgende Aktivierung der Düse mit einem von einem Schneiden des Werkstücks, Ritzen des Werkstücks, Abtragen des Werkstücks, Schweißen des Werkstücks und Kombinationen davon verbunden ist.

6. Kapazitives Messsystem nach einem der Ansprüche 1 bis 5, wobei das Bypassfilter (28) eines von einem Tiefpassfilter, einem Hochpassfilter und einem Kerbfilter ist.

7. Kapazitives Messsystem nach einem der Ansprüche 1 bis 6, ferner umfassend einen Hochfrequenzdetektor (32), der mit dem Hochfrequenz-Bypassfilter hoher Ordnung (28) gekoppelt ist.

8. Kapazitives Messsystem nach Anspruch 7, wobei der Hochfrequenzdetektor (32) einen variierenden Ausgang des Filters in eine variierende Spannung umwandelt.

9. Messsystem für einen Laser, wobei das System umfasst:
einen Laser mit einer Düse (16);
einen Betätigungsmechanismus (14), der mit der Düse gekoppelt ist;
ein kapazitives Messsystem (10) nach Anspruch 1, das einen Kondensator umfasst, der aus der Düse, einem Polymerwerkstück und einer Bezugserde gebildet ist; und
einen Hochfrequenzdetektor (32), der so ausgelegt ist, dass er einen variierenden Ausgang des Bypassfilters des kapazitiven Messsystems in eine variierende Spannung umwandelt, wobei der Betätigungsmechanismus mit dem Hochfrequenzdetektor betriebsfähig gekoppelt ist, um die Düse in Reaktion auf die variierende Spannung zu bewegen.

10. Messsystem nach Anspruch 9, ferner umfassend eine kapazitive Kompensationsschaltung (20), die mit dem Bypassfilter betriebsfähig gekoppelt ist.

11. Messsystem nach Anspruch 10, wobei die Kompensationsschaltung (20) eine Rückführungsschleife zwischen einem Ausgang einer Verstärkungsstufe und dem Oszillator bildet.

12. Messsystem nach Anspruch 11, wobei die Kompensationsschaltung (20) selektiv zugeschaltet wird, wenn sich die Düse in einem inaktiven Zustand befindet.

13. Messsystem nach Anspruch 9, wobei die Verstärkungsstufe der Kompensationsschaltung von einer ersten Verstärkung von 8-fach auf eine zweite Verstärkung von 32-fach eingestellt werden kann.

## Revendications

1. Système de détection capacitive (10) destiné à mesurer la hauteur d'une tête laser au-dessus d'une pièce à travailler en matière plastique, ledit système comprenant :
une buse de tête laser (16) formant une première plaque de condensateur ; la pièce à travailler en matière plastique (18) formant une partie diélectrique du condensateur, le condensateur comportant une prise de terre ;
un oscillateur à radiofréquence sensible à la capacité (26) couplé fonctionnellement au condensateur, ledit oscillateur délivrant une sortie ;
un circuit de compensation de température/humidité (20) formant une boucle de rétroaction entre une sortie d'étage de gain (34) et l'oscillateur à radiofréquence sensible à la capacité, le circuit de compensation de température/humidité étant conçu pour compenser des variations de capacité de fond, dans lequel l'étage de gain est agencé pour être réglé d'un premier gain à un second gain afin de détecter différents matériaux ; et
un filtre de dérivation d'ordre élevé (28) pour traiter la sortie de l'oscillateur afin de mesurer des variations de capacité du condensateur.

2. Système de détection capacitive selon la revendication 1, comprenant en outre un actionneur (14) conçu pour déplacer la buse de tête laser (16) en réponse aux variations de capacité du condensateur.

3. Système de détection capacitive selon l'une quelconque des revendications 1 et 2, dans lequel le filtre de dérivation d'ordre élevé a un temps de réponse inférieur à environ 0,01 ms.

4. Système de détection capacitive selon la revendication 1, comprenant en outre un dispositif de commande (24) conçu pour enclencher le circuit de compensation à des intervalles entre des activations successives de la buse de laser.

5. Système de détection capacitive selon la revendication 4, dans lequel l'activation successive de la buse est associée à une opération parmi la découpe de la pièce à travailler, le rainurage de la pièce à travailler, l'ablation sur la pièce à travailler, le soudage de la pièce à travailler et leurs combinaisons.

6. Système de détection capacitive selon l'une quelconque des revendications 1 à 5, dans lequel le filtre de dérivation (28) est un filtre parmi un filtre passe-bas, un filtre passe-haut et un filtre coupe-bande.

7. Système de détection capacitive selon l'une quelconque des revendications 1 à 6, comprenant en outre un détecteur radiofréquence (32) couplé au filtre de dérivation d'ordre élevé à haute fréquence (28).

8. Système de détection capacitive selon la revendication 7, dans lequel le détecteur radiofréquence (32) convertit une sortie variable du filtre en une tension variable.

9. Système de détection destiné à un laser, le système comprenant :
un laser comportant une buse (16) ;
un mécanisme d'actionnement (14) accouplé à la buse ;
un système de détection capacitive (10) selon la revendication 1, comprenant un condensateur constitué de la buse et d'une pièce à travailler en matière polymère ainsi que d'une prise de terre ; et
un détecteur radiofréquence (32) conçu pour convertir une sortie variable du filtre de dérivation du système de détection capacitive en une tension variable, dans lequel ledit mécanisme d'actionnement est couplé fonctionnellement au détecteur radiofréquence pour déplacer la buse en réponse à la tension variable.

10. Système de détection selon la revendication 9, comprenant en outre un circuit de compensation capacitive (20) couplé fonctionnellement au filtre de dérivation.

11. Système de détection selon la revendication 10, dans lequel le circuit de compensation (20) forme une boucle de rétroaction entre une sortie d'étage de gain et l'oscillateur.

12. Système de détection selon la revendication 11, dans lequel le circuit de compensation (20) est enclenché de façon sélective lorsque la buse est à l'état rétracté.

13. Système de détection selon la revendication 9, dans lequel l'étage de gain du circuit de compensation peut être réglé d'un premier gain de 8x à un second gain de 32x.
